# EUROPEAN PATENT APPLICATION

(11) **EP 4 071 915 A1**
(43) Date of publication of application: **12.10.2022**
(21) Application number: 20902735.8
(22) Date of filing: 21.12.2020
(51) Int. Cl.: H01M 50/403, H01M 50/446, H01M 50/449, H01M 10/058, H01M 10/052, H01M 4/04, H01M 50/46

(54) **MEMBRANE FOR ELECTROCHEMICAL DEVICE, ELECTROCHEMICAL DEVICE INCLUDING MEMBRANE, AND METHOD FOR MANUFACTURING ELECTROCHEMICAL DEVICE**

(30) Priority: 19.12.2019 KR 20190171169; 20.12.2019 KR 20190172441
(71) Applicant: LG Energy Solution, Ltd., Seoul 07335 (KR)
(72) Inventor: KIM, Dae-Soo, Daejeon 34122 (KR); KIM, Young-Deok, Daejeon 34122 (KR); CHOI, Hyun-Jun, Daejeon 34122 (KR); KIM, Seok-Koo, Daejeon 34122 (KR); JEE, Su-Won, Daejeon 34122 (KR)
(74) Representative: Hoffmann Eitle
(86) International application number: PCT/KR2020/018819
(87) International publication number: WO 2021/125916

(57) **Abstract**

An aspect of the present disclosure relates to a separator for a lithium secondary battery comprising a porous polymer substrate and a porous coating layer formed on at least one surface of the porous polymer substrate, wherein the separator has ionic conductivity of 4.75 × 10⁻⁵ S/cm or more, and the porous coating layer comprises interstitial volume and a macro pore having a larger diameter than the interstitial volume together, and a method for manufacturing the same. Accordingly, there is provided the separator with significantly improved ionic conductivity than commercial separators.

## Description

### TECHNICAL FIELD

The present application claims priority to Korean Patent Application No. 10-2019-0171169 filed in the Republic of Korea on December 19, 2019 and Korean Patent Application No. 10-2019-0172441 filed in the Republic of Korea on December 20, 2019, the disclosure of which is incorporated herein by reference. The present disclosure relates to a separator for an electrochemical device, an electrochemical device comprising the separator and a method for manufacturing the electrochemical device.

### BACKGROUND ART

Recently, there has been an increasing interest in energy storage technology day by day. As the application field of energy storage technology has been extended to mobile phones, camcorders, laptop computers, and even electric cars, many efforts have been devoted to studying and developing electrochemical devices. In this aspect, electrochemical devices are attracting more attention, and especially, development of rechargeable secondary batteries is the focus of attention, and more recently, in the development of batteries, new electrode and battery design for improving the capacity density and specific energy have been studied and developed.

In currently available secondary batteries, lithium secondary batteries developed in early 1990's have much higher operating voltage and energy density than traditional batteries using aqueous electrolyte solutions such as Ni-MH, Ni-Cd, lead-acid batteries, and by virtue of these advantages, lithium secondary batteries are gaining much attention.

Electrochemical devices, for example, lithium secondary batteries are produced by many manufacturers, and each shows different safety characteristics. Assessment and management of the safety of electrochemical devices is very grave. The most important consideration is that electrochemical devices should not cause injury to users in the event of malfunction, and for this purpose, Safety Regulations strictly prohibit fire and flame in electrochemical devices. In the safety characteristics of electrochemical devices, overheating and eventual thermal runaway in electrochemical devices or piercing of separators poses a high risk of explosion. Particularly, polyolefin-based porous polymer substrates commonly used for separators of electrochemical devices show extremely severe thermal contraction behaviors at the temperature of 100°C or above due to their properties of materials and manufacturing processes including stretching, causing a short circuit between the positive electrode and the negative electrode.

To solve the safety problem of electrochemical devices, suggestions have been made on a separator having a porous coating layer formed by coating a mixture of inorganic particles and a binder polymer on at least one surface of a porous polymer substrate having a plurality of pores.

However, the porous coating layer is a densely packed structure of the inorganic particles, and accordingly, the separator has much lower ionic conductivity than a porous polymer substrate used as a separator.

### DISCLOSURE

### Technical Problem

An aspect of the present disclosure is directed to providing a separator having a porous coating layer with improved heat resistance, adhesion to electrodes and improved ionic conductivity and an electrochemical device, for example, a lithium ion secondary battery, comprising the same. The present disclosure is further directed to providing a method for manufacturing the electrochemical device. Finally, the present disclosure is aimed at increasing the production yield of an electrode assembly when manufacturing the electrochemical device. It will be easily understood that these and other objects and advantages of the present disclosure may be realized by the means or methods defined in the appended claims and a combination thereof.

### Technical Solution

An aspect of the present disclosure provides a method for manufacturing a lithium secondary battery according to the following embodiments.

A first aspect of the present disclosure relates to a method for manufacturing a lithium ion secondary battery, the method comprising (S10) preparing a separator comprising a porous polymer substrate and a porous coating layer formed on at least one surface of the porous polymer substrate; (S20) thermally treating the separator in the presence of an organic solvent; and (S30) putting an electrode assembly comprising the manufactured separator interposed between a positive electrode and a negative electrode in a battery case and injecting an electrolyte solution to manufacture a battery, wherein the porous coating layer comprises inorganic particles and a binder polymer, the binder polymer comprises a fluorine-based copolymer, the fluorine-based copolymer comprises a vinylidene fluoride (VDF) monomer and a comonomer that is copolymerizable with the vinylidene fluoride, the comonomer content is 5 to 15 percent by weight based on 100 percent by weight of the fluorine-based copolymer, and the separator has ionic conductivity of 4.75 × 10⁻⁴ S/cm or more.

According to a second aspect of the present disclosure, in the first aspect, (S20) the thermal treatment step is performed at a temperature of 75 °C or more.

According to a third aspect of the present disclosure, in the first or second aspect, the step (S10) comprises coating a porous coating layer forming slurry comprising the inorganic particles and the binder polymer on the porous polymer substrate and drying.

According to a fourth aspect of the present disclosure, in any one of the first to third aspects, the organic solvent comprises at least one of propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethylmethyl carbonate (EMC), or γ-butyrolactone.

According to a fifth aspect of the present disclosure, in any one of the first to fourth aspects, the step (S20) comprises thermally treating the separator to form a macro pore that is one to five times larger than an average diameter of interstitial volume in the porous coating layer within the separator.

According to a sixth aspect of the present disclosure, in any one of the first to fifth aspects, the fluorine-based copolymer has crystallinity of 30% or less and/or a melting temperature of 155°C or less.

According to a seventh aspect of the present disclosure, in any one of the first to sixth aspects, the method further comprises, after the step (S30), (S40) activating the battery containing the injected electrolyte solution.

An eighth aspect of the present disclosure relates to another embodiment of a method for manufacturing a lithium ion secondary battery, the method comprising (SI00) preparing a separator comprising a porous polymer substrate and a porous coating layer formed on at least one surface of the porous polymer substrate; (S200) putting an electrode assembly comprising the separator interposed between a positive electrode and a negative electrode in a battery case and injecting an electrolyte solution to manufacture a battery; (S300) activating the battery; and (S400) thermally treating the battery between the steps (S200) and (S300) or after the step (S300), wherein the porous coating layer comprises inorganic particles and a binder polymer, the binder polymer comprises a fluorine-based copolymer, the fluorine-based copolymer comprises a vinylidene fluoride (VDF) monomer and a comonomer that is copolymerizable with the vinylidene fluoride, the comonomer content is 10 to 15 percent by weight or less based on 100 percent by weight of the fluorine-based copolymer, and the separator has ionic conductivity of 4.75 × 10⁻⁵ S/cm or more.

According to a ninth aspect of the present disclosure, in the eighth aspect, the fluorine-based copolymer has crystallinity of 30% or less and/or a melting temperature of 155°C or less.

A tenth aspect of the present disclosure relates to a lithium ion secondary battery, the battery comprising a positive electrode, a negative electrode and a separator interposed between the positive electrode and the negative electrode, wherein the separator comprises a porous polymer substrate and a porous coating layer formed on at least one surface of the porous polymer substrate, the porous coating layer comprises inorganic particles and a binder polymer, the binder polymer comprises a fluorine-based copolymer, the fluorine-based copolymer comprises a vinylidene fluoride (VDF) monomer and a comonomer that is copolymerizable with the vinylidene fluoride, the comonomer content is 5 to 15 percent by weight based on 100 percent by weight of the fluorine-based copolymer content, and the porous coating layer comprises interstitial volume which is a space defined by the inorganic particles in substantially contact with each other, at the same time, the porous coating layer comprises a macro pore formed by dissolution of the fluorine-based copolymer in the electrolyte solution, and the separator has ionic conductivity of 4.75 × 10⁻⁴ S/cm or more.

According to an eleventh aspect of the present disclosure, in the tenth aspect, the porous coating layer comprises the macro pore that is larger than the interstitial volume, and the porous coating layer comprises the interstitial volume and the macro pore together.

According to a twelfth aspect of the present disclosure, in the tenth or eleventh aspect, an average diameter (D50) of the macro pore is one to five time larger than an average diameter of the interstitial volume.

According to a thirteenth aspect of the present disclosure, in any one of the tenth to twelfth aspects, the average diameter (D50) of the interstitial volume in the porous coating layer is 0.001 *µ*m to 0.1 *µ*m, and the average diameter (D50) of the macro pore is larger than the average diameter of the interstitial volume, and is 0.5 *µ*m to 5 *µ*m.

According to a fourteenth aspect of the present disclosure, in any one of the tenth to thirteenth aspects, the comonomer comprises at least one of hexafluoropropylene (HFP), trifluoroethylene (TrFE), tetrafluoroethylene (TFE), methyl vinyl ether or ethyl vinyl ether (EVE).

According to a fifteenth aspect of the present disclosure, in any one of the tenth to fourteenth aspects, the fluorine-based copolymer has crystallinity of 30% or less and/or a melting temperature of 155°C or less.

### Advantageous Effects

The present disclosure improves the ionic conductivity of the separator by performing the thermal treatment step of maintaining the battery at high temperature for a predetermined time. Additionally, the separator of the present disclosure has improved dry adhesion to electrodes, thereby improving the processability of the lamination process and reducing the failure rate.

### BRIEF DESCRIPTION OF THE DRAWINGS

FIG. 1 is a schematic flowchart of a method for manufacturing a separator according to an aspect of the present disclosure.
FIG. 2 is a cross-sectional scanning electron microscopy (SEM) image of a separator before thermal treatment according to an embodiment of the present disclosure.
FIG. 3 is a cross-sectional SEM image of a separator after thermal treatment according to an embodiment of the present disclosure.
FIG. 4 is a graph showing the ionic conductivity of separators of example and comparative example of the present disclosure.
FIG. 5 shows a comparison result of the measured ionic conductivity of batteries according to example 5 and comparative example 9.

### DETAILED DESCRIPTION

Hereinafter, the present disclosure will be described in detail. It should be understood that the terms or words used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

It will be further understood that when an element is referred to as being ^{┌}connected to_{┘} another element, it can be ^{┌}directly connected to_{┘} the other element or intervening elements may be present. Additionally, the connection encompasses a physical connection as well as an electrochemical connection.

The term ^{┌}comprises_{┘} when used in this specification, specifies the presence of stated elements, but does not preclude the presence or addition of one or more other elements, unless the context clearly indicates otherwise.

Additionally, ^{┌}comprise_{┘} and/or ^{┌}comprising_{┘} when used in this specification, specifies the presence of stated features, integers, steps, operations, elements, components and/or groups thereof, but does not preclude the presence or addition of one or more other features, integers, operations, elements, components, and/or groups thereof.

It will be understood that ^{┌}about_{┘} and ^{┌}substantially_{┘} are used herein in the sense of at, or nearly at, when given the manufacturing and material tolerances inherent in the stated circumstances and are used to prevent the unscrupulous infringer from unfairly taking advantage of the disclosure where exact or absolute figures are stated as an aid to understanding the present disclosure.

It will be further understood that ^{┌}combination(s) thereof_{┘} in Markush type language as used herein, refers to a mixture or combination of one or more selected from the group consisting of elements stated in Markush type language, and specifies the inclusion of one or more selected from the group consisting of the elements.

^{┌}A and/or B_{┘} when used in this specification, specifies ^{┌}either A or B or both_{┘} .

In the present disclosure, dry adhesion refers to adhesion in an electrochemical device before contact between a separator and an electrolyte solution, for example, before the wetting of an electrode assembly with an electrolyte solution. For example, dry adhesion refers to adhesion between an electrode and a separator. Meanwhile, wet adhesion refers to adhesion in an electrochemical device (for example, adhesion between an electrode and a separator) after contact with an electrolyte solution, for example, after the wetting of an electrode assembly with an electrolyte solution.

Particular terms used in the following detailed description are for the convenience of description and understanding but not intended to limit the scope of the present disclosure. These terms include the above mentioned words, their derivatives and words having similar meanings.

Hereinafter, the present disclosure will be described in detail.

The present disclosure relates to a separator for an electrochemical device and an electrochemical device comprising the separator. In the present disclosure, the electrochemical device is a device that converts chemical energy to electrical energy by electrochemical reactions, and is a concept encompassing a primary battery and a secondary battery, and the secondary battery can be recharged, and is a concept encompassing a lithium ion battery, a nickel-cadmium battery and a nickel-hydrogen battery. In an embodiment of the present disclosure, the electrochemical device may be a secondary battery, and the secondary battery may comprise a lithium ion battery.

Meanwhile, in the present disclosure, the separator serves as an ion-conducting barrier that allows ions to pass while blocking the electrical contact between the negative electrode and the positive electrode in the electrochemical device. Preferably, the separator has a plurality of pores, and the pores are interconnected with each other to allow gas or liquid to pass from one surface of the separator to the other.

In the electrochemical device, for example, a lithium secondary battery, in general, the separator comprises a porous polymer substrate, and thus may exhibit thermal shrinkage behavior. Accordingly, a porous coating layer is introduced to reduce the thermal shrinkage of the separator.

When the porous coating layer is introduced, the heat resistance of the separator is improved, but the ionic conductivity of the separator reduces due to the packed inorganic particles.

The present disclosure is directed to providing a separator with improved ionic conductivity by increasing the pore size in the porous coating layer through a binder polymer having predetermined properties and a process and a lithium secondary battery comprising the same.

The inventors found that in the research of the separator comprising a fluorine-based copolymer as the binder polymer in the porous coating layer, when the comonomer content in the fluorine-based copolymer is low, adhesion to electrodes is low, resulting in a high failure rate in the manufacture of an electrode assembly.

To solve this problem, the inventors made efforts to increase the comonomer content in the fluorine-based copolymer, but found that high comonomer content increases the adhesion to electrodes, but increases the resistance of the separator.

An aspect of the present disclosure is directed to providing a separator with improved ionic conductivity while maintaining adhesion to electrodes at the equal or similar level to the conventional art and a lithium secondary battery comprising the same.

Accordingly, a lithium secondary battery according to an aspect of the present disclosure comprises a positive electrode, a negative electrode and a separator interposed between the positive electrode and the negative electrode, wherein the separator comprises a porous polymer substrate and a porous coating layer formed on at least one surface of the porous polymer substrate,
the porous coating layer comprises inorganic particles and a binder polymer,
the binder polymer comprises a fluorine-based copolymer,
the fluorine-based copolymer comprises a vinylidene fluoride (VDF) monomer and a comonomer that is copolymerizable with the vinylidene fluoride,
the comonomer content is 8 to 15 percent by weight based on 100 percent by weight of the fluorine-based copolymer,
the porous coating layer comprises interstitial volume which is a space defined by the inorganic particles in substantial contact with each other, and
at the same time, the porous coating layer comprises a macro pore formed by dissolution of the fluorine-based copolymer in an electrolyte solution, and
the separator has ionic conductivity of 4.75 × 10⁻⁵ S/cm or more.

The separator according to an aspect of the present disclosure may have a much larger pore than the current commercial separators. Accordingly, it is possible to improve the ionic conductivity. For example, the ionic conductivity may be higher by 30% than the conventional art.

In an embodiment of the present disclosure, the separator has good dry adhesion, thereby reducing a fault ratio in the manufacture of the electrode assembly. Additionally, a part of the binder polymer included in the porous coating layer is released into or an organic solvent or the electrolyte solution in the thermal treatment step as described below, thereby improving the porosity of the porous coating layer and enhancing the ionic conductivity. In particular, the binder polymer having the above-described properties may form local agglomeration in the porous coating layer, and when at least part or the entirety of the agglomerated binder is dissolved through thermal treatment as described below, a void left after the release of the binder may become a relative large pore.

In this instance, the extent and location of agglomeration of the binder polymer in the porous coating layer may be adjusted by controlling the properties of the binder polymer. That is, the ionic conductivity of the separator may be improved by intentionally inducing the agglomeration of the binder polymer in the porous coating layer and releasing by thermal treatment.

The binder polymer comprises the fluorine-based copolymer. The fluorine-based copolymer is electrochemically stable and has good oxidation resistance.

In a specific embodiment of the present disclosure, the fluorine-based copolymer comprises the vinylidene fluoride (VDF) monomer and the comonomer that is copolymerizable with the vinylidene fluoride (VDF), and the comonomer content is 15 percent by weight or less based on 100 percent by weight of the fluorine-based copolymer. When the comonomer content is higher than 15 percent by weight, after the wetting with the electrolyte solution, the resistance of the separator increases too much, which makes it difficult to use as a separator for a secondary battery. Meanwhile, in an embodiment of the present disclosure, the comonomer content may be 5 percent by weight or more, 8 percent by weight or more or 10 percent by weight or more.

When the comonomer content is less than 5 percent by weight or less than 8 percent by weight, the fluorine-based copolymer less agglomerates. Accordingly, it is impossible to form a desired pore size even though the thermal treatment process is performed later. Additionally, when the comonomer content is less than 5 percent by weight or less than 8 percent by weight, adhesion to electrodes and/or dry adhesion the porous polymer substrate is low, resulting in a high fault ratio in the manufacture of the electrode assembly.

Accordingly, in a specific embodiment of the present disclosure, the comonomer content may be 15 percent by weight or less, 14 percent by weight or less, 13 percent by weight or less, 12 percent by weight or less, 11 percent by weight or less, or 10 percent by weight or less based on 100 percent by weight of the fluorine-based copolymer, and may be 5 percent by weight or more, 7 percent by weight or more, 8 percent by weight or more, 9 percent by weight or more or 10 percent by weight or more based on 100 percent by weight of the fluorine-based copolymer.

In a specific embodiment of the present disclosure, the comonomer may comprise at least one of hexafluoropropylene (HFP), trifluoroethylene (TrFE), tetrafluoroethylene (TFE), methyl vinyl ether, ethyl vinyl ether (EVE), chlorofluoroethylene (CTFE), 1,2-difluoroethylene, perfluoro(alkylvinyl)ether such as perfluoro(methylvinyl)ether (PMVE), perfluoro(ethylvinyl)ether (PEVE) and perfluoro(propylvinyl)ether (PPVE), perfluoro(1,3-dioxol) or perfluoro(2,2-dimethyl-1,3-dioxol) (PDD).

Among the fluorine-based copolymers, P(VDF-HFP) is desirable since it is easy to form pores by wet phase separation, and has high adhesion to the porous coating layer surface.

Meanwhile, in an embodiment of the present disclosure, the fluorine-based copolymer may have the melting point (Tm) of 155°C or less, or 140°C or less. Together with or independently of the melting temperature condition, the fluorine-based copolymer may have crystallinity of 30% or less, or 25% or less. For example, the fluorine-based copolymer may have the melting temperature of 155°C or less and the crystallinity of 30% or less, and the degree of substitution of the comonomer may be 5 percent by weight or more and 15 percent by weight or less.

In the present disclosure, the crystallinity may be a result of dividing the enthalpy of fusion (ΔH) value measured by Differential scanning calorimetry (DSC) by the theoretical enthalpy of fusion (ΔH) value of a perfect crystal (crystallinity 100%), and may be indicated in %. Here, the theoretical enthalpy of fusion value of the perfect crystal may be found in the polymer handbook in the case of a known polymer, and in the case of an unknown material or a newly synthesized material, may be calculated by extrapolation wherein the crystallinity is extended by 2 point or more.

When the fluorine-based copolymer satisfies the above-described condition, it is possible to ensure high bonding between the electrode and the separator and high interfacial bonding in the separator in the battery manufacturing process as described below, resulting in good processability in the manufacture of the electrode assembly. That is, since the fluorine-based copolymer has high dry adhesion before the wetting with the electrolyte solution, it is possible to reduce a fault ratio such as separation of the separator and the electrode in the manufacture of the electrode assembly and/or in the process of receiving the manufactured electrode assembly in the battery case.

In the present disclosure, the porous coating layer preferably has a porous structure in terms of ion permeation. The porous coating layer comprises the binder resin and the inorganic particles. The porous coating layer has a plurality of micropores inside and the micropores are interconnected with each other. The porous coating layer has the structural feature of a porous layer that allows a gas or liquid to pass from one surface to the other. In a specific embodiment of the present disclosure, the porous coating layer comprises the interstitial volume which is a space defined by the inorganic particles in substantial contact with each other, and together with the interstitial volume, comprises the pores having the diameter that is 1 to 5 times larger than the average diameter of the interstitial volume. In other words, the porous coating layer comprises the plurality of pores having much larger diameter than the interstitial volume.

In an aspect of the present disclosure, a pore formed by dissolution of the fluorine-based copolymer in the electrolyte solution is called a macro pore. The inorganic particle is not included in the macro pore. The surface of the macro pore may be surrounded by the binder polymer.

The average diameter D50 of the macro pore may be 1 to 5 times larger than that of the interstitial volume.

For example, the average diameter D50 of the interstitial volume in the porous coating layer is 0.001 *µ*m to 0.1 *µ*m.

The average diameter D50 of the macro pore is larger than the average diameter of the interstitial volume, and may be 0.5 *µ*m to 5 *µ*m.

In a specific embodiment of the present disclosure, the weight average molecular weight of the fluorine-based copolymer may be 100,000 or more, or 200,000 or more, or 300,000 or more, or 400,000 or more, or 500,000 or more. Additionally, the weight average molecular weight of the fluorine-based copolymer may be 2,000,000 or less, or 1,000,000 or less, or 900,000 or less, or 800,000 or less. For example, the weight average molecular weight may be 250,000 to 800,000 in terms of heat resistance and adhesion and processability.

In this instance, the weight average molecular weight may be measured using gel permeation chromatography (GPC) (PL GPC220, Agilent Technologies).

In detail, the measurement may be performed under the following analysis conditions:
- Column: PL MiniMixed B x 2
- Solvent: THF
- Flow rate: 0.3 ml/min
- Specimen concentration: 2.0 mg/ml
- Injection amount: 10 *µ*ℓ
- Column temperature: 40°C
- Detector: Agilent RI detector
- Standard: Polystyrene (fitted to a third degree polynominal)
- Data processing: ChemStation

In the separator according to an aspect of the present disclosure, the porous coating layer comprises the inorganic particles.

The inorganic particle comprises, without limitation, any type of inorganic particle that is electrochemically stable. That is, the inorganic particle that may be used in the present disclosure comprises any type of inorganic particle that does not cause oxidation and/or reduction reactions in the operating voltage range (for example, 0~5V versus Li/Li+) of the electrochemical device used. In particular, the use of a high dielectric constant inorganic particle as the inorganic particle contributes to the increased degree of dissociation of an electrolyte salt, for example, a lithium salt, in a liquid electrolyte, thereby improving the ionic conductivity of the electrolyte solution.

By the above-described reasons, the inorganic particle may comprise an inorganic particle having the dielectric constant of 5 or more, an inorganic particle capable of transporting lithium ions and a combination thereof.

The inorganic particle having the dielectric constant of 5 or more may comprise at least one selected from the group consisting of Al(OH)₃, Al₂O₃, SiO₂, ZrO₂, AlO(OH), TiO₂, BaTiO₃, Pb(ZrₓTi₁₋ₓ)O₃ (PZT, 0 < x < 1), Pb₁₋ₓLaₓZr_{1-y}Ti_{y}O₃ (PLZT, 0 < x < 1, 0 < y < 1), (1-x)Pb(Mg_{1/3}Nb_{2/3})O₃₋ₓPbTiO₃ (PMN-PT, 0 < x < 1), hafnia (HfO₂), SrTiO₃, SnO₂, CeO₂, MgO, NiO, CaO, ZnO, ZO₃ and SiC.

The inorganic particle capable of transporting lithium ions may comprise at least one selected from the group consisting of lithium phosphate (Li₃PO₄), lithium titanium phosphate (LiₓTi_{y}(PO₄)₃, 0 < x < 2, 0 < y < 3), lithium aluminum titanium phosphate (LiₓAl_{y}Ti_{z}(PO₄)₃, 0 < x < 2, 0 < y < 1, 0 < z < 3), (LiAlTiP)ₓO_{y}-based glass (0 < x < 4, 0 < y < 13), lithium lanthanum titanate (LiₓLa_{y}TiO₃, 0 < x < 2, 0 < y < 3), lithium germanium thiophosphate (LiₓGe_{y}P_{z}S_{w}, 0 < x < 4, 0 < y < 1, 0 < z < 1, 0 < w < 5), lithium nitride (LiₓN_{y}, 0 < x <4, 0 < y < 2), SiS₂-based glass (LiₓSi_{y}S_{z}, 0 < x < 3, 0 < y < 2, 0 < z < 4) and P₂S₅-based glass (LiₓP_{y}S_{z}, 0 < x < 3, 0 < y < 3, 0 < z < 7).

There is no particular limitation on the average particle size of the inorganic particle, but for the porous coating layer of a uniform thickness and appropriate porosity, the average particle size preferably ranges between 0.001 and 10 *µ*m, more preferably between 1 and 700 nm, and even more preferably between 20 and 500 nm.

The thickness of the porous coating layer may be 1 to 15 *µ*m, and more specifically 1.5 to 5 *µ*m on the basis of one side coating. There is no particular limitation on the porosity of the porous coating layer but the porosity is preferably 35 to 85%. For example, the porosity of the porous coating layer may be 40 vol% to 70 vol%, and within the above-described range, the porosity may be 40 vol% or more or 45 vol% or more, and in conjunction with this or independently of this, may be 70 vol% or less or 65 vol% or less. When considering the ionic conductivity, i.e., in terms of a sufficient channel for ions to move, the porosity may be adjusted to 40 vol% or more. Additionally, in terms of heat resistance and adhesion, the porosity may be adjusted to 65 vol% or less. Accordingly, considering the electrical and chemical properties, the porosity of the porous coating layer may be properly adjusted within the above-described range.

The term 'average particle size' as used herein refers to the average particle size D50 of the inorganic particles, and may be defined as the particle size at 50% particle size distribution. In an embodiment of the present disclosure, the particle size may be measured using a laser diffraction method. In general, the laser diffraction method can measure the particle size from submicron scale to a few nm, and can obtain the results with high reproducibility and high resolution.

In a specific embodiment of the present disclosure, the weight ratio of the inorganic particles and the binder polymer may range 50:50 to 99:1, and for example, may be 90: 10 to 60 : 40. The ratio may be properly adjusted within the above-described range, and for example, the binder resin may be 50 wt% or less, 40 wt% or less, or 30 wt% or less based on 100 wt% of the sum of the binder resin and the inorganic particles. Additionally, within the above-described range, the binder resin may be 1 wt% or more, 5 wt% or more or 10 wt% or more. When the ratio of the amount of inorganic particles to the amount of binder polymer satisfies the above range, it is possible to prevent the reduction in the pore size and the porosity of the porous coating layer due to the high amount of the binder polymer, and prevent the reduction in the peel resistance of the porous coating layer due to the low amount of the binder polymer.

Additionally, in addition to the above-described fluorine-based binder polymer, a porous coating layer forming slurry may further comprise a binder polymer having an adhesive property commonly used in the art. In a specific embodiment of the present disclosure, in addition to the fluorine-based copolymer, if necessary, the porous coating layer forming slurry may further comprise a second binder resin of at least one selected from the group consisting of fluorine-based binder resin B, polyacrylonitrile, polyvinylpyrrolidone, polyvinylacetate, polyethylene-co-vinyl acetate, polyethylene oxide, polyarylate, cyanoethylpullulan, cyanoethylpolyvinylalcohol, cyanoethylcellulose, cyanoethylsucrose and pullulan. The second binder resin may be included in an amount of 30 wt% or less, 10 wt% or less, or 5 wt% or less, or 1 wt% or less based on 100 wt% of the total binder resin. The fluorine-based binder resin B is an additional second binder resin, and does not meet the above-described requirements for the fluorine-based copolymer.

In a method for manufacturing a separator according to an aspect of the present disclosure, in addition to the inorganic particles and the binder polymer, the porous coating layer may further comprise any other additive.

In detail, the porous polymer substrate may be a porous polymer film substrate or a porous polymer nonwoven substrate.

The porous polymer film substrate may be a porous polymer film of polyolefin such as polyethylene and polypropylene, and the polyolefin porous polymer film substrate exhibits a shutdown function, for example, at the temperature of 80°C to 150°C.

In this instance, the polyolefin porous polymer film may comprise polyolefin-based polymer including polyethylene such as high density polyethylene, linear low density polyethylene, low density polyethylene and ultra high molecular weight polyethylene, polypropylene, polybutylene and polypentene, used singly or in combination.

Additionally, the porous polymer film substrate may be formed in the shape of a film using various types of polymers such as polyolefin as well as polyester. Additionally, the porous polymer film substrate may be formed by stacking two or more film layers, and each film layer may comprise at least one of polyolefin or polyester described above.

Additionally, in addition to the polyolefin-based polymer, the porous polymer film substrate and the porous nonwoven substrate may comprise at least one of polyethyleneterephthalate, polybutyleneterephthalate, polyester, polyacetal, polyamide, polycarbonate, polyimide, polyetheretherketone, polyethersulfone, polyphenyleneoxide, polyphenylenesulfide or polyethylenenaphthalene.

There is no particular limitation on the thickness of the porous polymer substrate, but the thickness is particularly 1 to 100 *µ*m, more particularly 5 to 50 *µ*m, and there is no particular limitation on the pore size and porosity of the porous polymer substrate, but the pore size and the porosity are preferably 0.01 to 50 *µ*m and 20 to 75 vol% respectively. In the present disclosure, the term porosity refers to a ratio of the volume occupied by pores to the total volume in a structure, and its unit is %, and may be interchangeably used with a void ratio and a pore space. In the present disclosure, the measurement of the porosity is not particularly limited, and according to an embodiment of the present disclosure, for example, the porosity may be measured by Brunauer-Emmett-Teller (BET) measurement using nitrogen gas or Hg porosimeter and in accordance with ASTM D-2873. Alternatively, after calculating the net density of the separator from the density (apparent density) of the separator, the composition of the materials included in the separator and the density of each component, the porosity of the separator may be calculated from a difference between the apparent density and the net density. Meanwhile, in an embodiment of the present disclosure, the pore size, the pore distribution and the average diameter (nm) of the pore may be measured using Capillary Flow Porometer. This method includes wetting the pores of the separator using a liquid of which the surface tension is known, applying air pressure and measuring the pressure at which an initial flow is generated (bubble point=max pore). A specific example of the Capillary Flow Porometer is Porous Materials CFP-1500-AE.

Subsequently, a method for manufacturing an electrochemical device comprising the separator will be described.

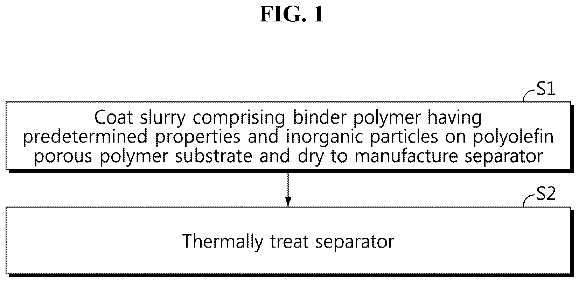

FIG. 1 is a process flowchart of the method for manufacturing an electrochemical device of the present disclosure. According to the method, after the separator is manufactured, the separator is thermally treated in the organic solvent or the electrolyte solution. In the present disclosure, the thermal treatment may be performed in the battery manufacturing process.

Hereinafter, the method for manufacturing an electrochemical device according to the present disclosure will be described through a specific embodiment.

An electrochemical device according to a first aspect of the present disclosure may be manufactured by the following method.

Specifically, the method comprises:
(S10) preparing a separator comprising a porous polymer substrate and a porous coating layer formed on at least one surface of the porous polymer substrate;
(S20) thermally treating the separator in the presence of an inorganic solvent; and
(S30) putting an electrode assembly comprising the manufactured separator interposed between a positive electrode and a negative electrode in a battery case and injecting an electrolyte solution to manufacture a battery.

Additionally, in an embodiment of the present disclosure, the method may further comprise (S40) activating the battery containing the injected electrolyte solution, after the steps (S30).

In the manufacturing method, the porous coating layer has the above-described structural feature.

In a specific embodiment of the present disclosure, the porous coating layer comprises inorganic particles and a binder polymer,
the binder polymer comprises a fluorine-based copolymer,
the fluorine-based copolymer comprises a vinylidene fluoride (VDF) monomer and a comonomer that is copolymerizable with the vinylidene fluoride,
the comonomer content is 5 to 15 percent by weight based on 100 percent by weight of the fluorine-based copolymer, and
the separator has ionic conductivity of 4.75 × 10⁻⁴ S/cm or more.

In this instance, 90% or more of the pores formed in the porous coating layer has a pore size of 0.01 *µ*m to 1 *µ*m.

In the method for manufacturing the separator according to an aspect of the present disclosure, the fluorine-based copolymer used comprises a vinylidene fluoride (VDF) monomer and a comonomer that is copolymerizable with the vinylidene fluoride.

The comonomer content is 5 percent by weight to 15 percent by weight based on 100 percent by weight of the fluorine-based copolymer.

Due to the inclusion of the comonomer within the above-described range, when the separator is put in the electrode assembly later, agglomeration occurs in the binder polymer, and when the agglomerated binder polymer dissolves in the organic solvent, a macro pore may be formed. Additionally, at the same time, the porous coating layer having good adhesion to electrodes may be manufactured. The formed macro pore is free of inorganic particles.

Any other binder polymer and inorganic particles may be used, and a reference is made to the above description.

Subsequently, the manufacturing method according to the first aspect will be described in detail. First, a porous coating layer forming slurry comprising a fluorine-based copolymer and inorganic particles is coated onto the polyolefin-based porous polymer substrate and dried to prepare a separator having a porous coating layer (S10).

There is no particular limitation on the method for coating the porous coating layer forming slurry on the porous polymer substrate, but a slot coating method or a dip coating method is desirable. The slot coating involves coating the slurry supplied through a slot die onto the front surface of the substrate, and may control the thickness of the coating layer according to the flow rate supplied from a constant volume pump. Additionally, the dip coating is a coating method including dipping the substrate in a tank containing the slurry and may control the thickness of the coting layer according to the concentration of the slurry and the speed at which the substrate is taken out of the slurry tank, and for more accurate control of the coating thickness, after dipping, measurement may be performed through a Meyer bar.

Meanwhile, in a specific embodiment of the present disclosure, the coating step may be performed under the relative humidity condition of 40 to 60%. Accordingly, it is possible to control the extent and location of agglomeration of the binder polymer.

The porous polymer substrate coated with the porous coating layer forming slurry is dried using a dryer such as an oven to form the porous coating layer on at least one surface of the porous polymer substrate.

In this instance, the drying step may be performed in the condition of 40 to 80 °C.

Meanwhile, non-limiting examples of the solvent for preparing the porous coating layer forming slurry may comprise at least one of acetone, tetrahydrofuran, methylene chloride, chloroform, dimethylformamide, N-methyl-2-pyrrolidone, methylethylketone or cyclohexane. Preferably, the solvent may be acetone.

In the porous coating layer, the inorganic particles are packed in contact with each other and bonded by the binder polymer, forming interstitial volume therebetween, and the interstitial volume is an empty space that are to be a pore.

That is, the binder polymer may bind the inorganic particles to hold them together, and for example, the binder polymer may connect and immobilize the inorganic particles. Additionally, the interstitial volume between the inorganic particles is an empty space that is to be a pore of the porous coating layer, and may be a space defined by the inorganic particles substantially in surface contact in the closely packed or densely packed structure by the inorganic particles.

Subsequently, the separator is thermally treated in the presence of the organic solvent (S20).

The thermal treatment step comprises dissolving the binder polymer included in the porous coating layer by the organic solvent. In other words, the thermal treatment step comprises dissolving the binder polymer by the organic solvent by changing the properties of the binder polymer in the presence of the organic solvent. In particular, the agglomerated binder polymer is released in this step. The organic solvent is not limited to a particular type and may include those commonly used in the art, for example, at least one of propylene carbonate (PC), ethylene carbonate (EC), diethyl carbonate (DEC), dimethyl carbonate (DMC), dipropyl carbonate (DPC), dimethyl sulfoxide, acetonitrile, dimethoxy ethane, diethoxy ethane, tetrahydrofuran, N-methyl-2-pyrrolidone (NMP), ethylmethyl carbonate (EMC), or γ-butyrolactone. In an embodiment of the present disclosure, 90% or more of the pores formed in the porous coating layer may have the pore size in the range of 0.01 *µ*m to 1 *µ*m through the thermal treatment step.

According to an embodiment of the present disclosure, in the thermal treatment step, the fluorine-based binder polymer dissolves by the chemical reaction between the fluorine-based binder polymer agglomerated in the lamination step of placing the separator between the positive electrode and the negative electrode and the electrolyte solution injected into the electrode assembly. Accordingly, the fluorine-based binder polymer changes the phase from solid to liquid, and the macro pore may be formed at the location at which the fluorine-based binder polymer is agglomerated and aggregated.

In contrast, the conventional aging step comprises maintaining a predetermined temperature and humidity for electrolyte solution wetting. When the aging step is performed longer than a proper time, a side reaction such as corrosion in the battery may occur, and accordingly it is necessary to pay attention when setting the time, and attention needs to be paid to the temperature and humidity conditions that affect the battery properties. In the present disclosure, the thermal treatment step has a different mechanism and effect from the conventional aging step.

In a specific embodiment of the present disclosure, the thermal treatment step may be performed at the temperature of 75 °C or more. More specifically, the thermal treatment step may be performed at 75 °C or more, 80 °C or more, or 85 °C or more, and 100 °C or less, or 95 °C or less, or 90 °C or less.

Additionally, the thermal treatment step may be performed for 1 hour or more. More specifically, the thermal treatment step may be performed for 1 hour or more, 2 hours or more, or 3 hours or more, and may be performed for 10 hours or less, 8 hours or less, or 6 hours or less.

Subsequently, a battery comprising the manufactured separator is manufactured (S30). In a specific embodiment, the step (S30) comprises placing the separator obtained in the step (S20) between the positive electrode and the negative electrode to manufacture an electrode assembly, putting the electrode assembly in the battery case and injecting the electrolyte solution.

In an embodiment of the present disclosure, the electrode assembly may be manufactured by placing the separator between the positive electrode and the negative electrode and winding together or stacking. In this instance, to bond the electrode and the separator, the pressure may be applied, and applying the pressure may be performed in the increasing temperature condition.

Meanwhile, in an embodiment of the present disclosure, the manufacturing method may further comprise (S40) activating the battery obtained in the step (S30).

The activation step may comprise initially charging the manufactured battery, whereby the electrode active material may be electrically activated, a solid electrolyte interphase (SEI) layer may be formed on the electrode surface. Meanwhile, before the activation step is performed, the aging step may be further performed to allow the injected electrolyte solution to sufficiently permeate the electrode assembly.

Meanwhile, in the activation step, gas may be generated in the battery through the decomposition reaction of the electrolyte solution. The gas generated during the initial charging may be let out through re-opening the sealed battery container or cutting a part of the battery container.

In an embodiment of the present disclosure, the charging may be performed in the state of charge (SOC) range of 10% or more, or 30% or more, or 50% or more, and there is no particular limitation on the upper limit of the SOC, but the upper limit of the SOC may be 100%, or 90%. Additionally, in the initial charging, the cutoff voltage may be 3.5V or more, or 3.5 to 4.5V, or 3.65 to 4.5V. The C-rate of the initial charging may be 0.05C to 2C, or 0.1C to 2C.

Meanwhile, in a specific embodiment of the present disclosure, the step of activating the secondary battery may further comprise the aging step before and/or after the charging the battery. The aging step may be performed in the range of 20°C to 85°C. For example, the aging step may be performed at the temperature of 20°C to 40°C, or 23°C to 35°C, or 23°C to 30°C, or 23°C to 2 7°C, or 23°C to 25°C. In this instance, the aging step may be performed for 1 day to 7 days, or 1 day to 5 days. According to an embodiment of the present disclosure, the activation step may be performed by charging in 0.1C CC condition up to 3.65 V at SOC 30 %, and storing at room temperature, 25 °C, for 3 days. Meanwhile, in the present disclosure, the aging step comprises storing the electrode assembly for a predetermined time, and has a different objective and mechanism from the above-described thermal treatment step.

The aging step is intended to optimize the movement of ions by sufficient distribution of the electrolyte solution in the battery, in particular, in the electrode assembly. To this end, the aging step comprises storing the battery in a predefined temperature and humidity condition for a predetermined time. The aging process may increase the battery wetting. The aging process may differ in time or temperature depending on the purpose of use, the specification of the final product and the battery cell configuration. In a specific embodiment of the present disclosure, the aging time may be 1 day to 3 days.

In contrast, the thermal treatment step described in the present disclosure comprises forming the macro pore in the porous coating layer by the dissolution of the agglomerated binder polymer in the porous coating layer by the electrolyte solution and/or the organic solvent. Accordingly, the thermal treatment step may comprise thermally treating the electrode assembly including the separator interposed between the positive electrode and the negative electrode or the separator itself.

Specifically, the fluorine-based copolymer used to manufacture the porous coating layer swells when reacting with the organic solvent or the electrolyte solution at room temperature, to produce an electrolyte solution polymer. The electrolyte solution polymer may grow to 0.01~ a few *µ*m depending on the concentration of the comonomer that is copolymerizable the vinylidene fluoride (VDF) and the environment in which the separator is manufactured. The electrolyte solution polymer significantly reduces the mobility of Li ions, so the ionic conductivity of the separator significantly reduces. However, the electrolyte solution polymer is released in the solvent of the electrolyte solution fast at a predetermined temperature (in the case of PVdF-HPF-electrolyte solution polymer, 60~80°C) or more. In this case, the electrolyte solution fills the space left after the electrolyte solution polymer is released, and when it is dried, the porous coating layer including the macro pore is formed.

Meanwhile, in an embodiment of the present disclosure, the thermal treatment step may be performed before or after the battery activation step after manufacturing the battery. A method for manufacturing an electrochemical device according to a second aspect of the present disclosure will be described as below.

Specifically, the method for manufacturing a lithium secondary battery according to the second aspect comprises:
(S100) preparing a separator comprising a porous polymer substrate and a porous coating layer formed on at least one surface of the porous polymer substrate;
(S200) putting an electrode assembly comprising the separator interposed between a positive electrode and a negative electrode in a battery case and injecting an electrolyte solution to manufacture a battery; and
(S300) activating the battery containing the injected electrolyte solution, and
(S400) thermally treating the battery between the steps (S200) and (S300) or after the step (S300).

In the manufacturing method, the porous coating layer has the above-described structural feature.

In a specific embodiment of the present disclosure, the porous coating layer comprises inorganic particles and a binder polymer,
the binder polymer comprises a fluorine-based copolymer,
the fluorine-based copolymer comprises a vinylidene fluoride (VDF) monomer and a comonomer that is copolymerizable with the vinylidene fluoride,
the comonomer content is 8 to 15 percent by weight or less based on 100 percent by weight of the fluorine-based copolymer, and
the separator has ionic conductivity of 4.75 × 10⁻⁵ S/cm or more.

Subsequently, the steps (SI00) to (S400) will be described in detail.

First, the separator is prepared (S100). The separator has the porous coating layer formed at least one surface of the porous polymer substrate. For the separator preparation method of this step, a reference is made to the above description of the step (S10).

The porous coating layer comprises the inorganic particles and the binder polymer,
the binder polymer comprises the fluorine-based copolymer,
the fluorine-based copolymer comprises the comonomer that is copolymerizable with the vinylidene fluoride (VDF), and
the comonomer content is 5 to 15 percent by weight based on 100 percent by weight of the fluorine-based copolymer.

Subsequently, a battery comprising the prepared separator is manufactured (S200). In a specific embodiment of the present disclosure, the step (S200) comprises placing the separator obtained in the step (S100) between the positive electrode and the negative electrode to manufacture an electrode assembly, putting the electrode assembly in the battery case and injecting the electrolyte solution.

In an embodiment of the present disclosure, the electrode assembly may be manufactured by placing the separator between the positive electrode and the negative electrode and winding together or stacking. In this instance, to bond the electrode and the separator, the pressure may be applied, and applying the pressure may be performed in the increasing temperature condition. The process of applying the pressure and/or the temperature for bonding is referred to as a lamination process. In the present disclosure, the fluorine-based polymer has good dry adhesion, thereby improving the processability in the manufacture of the electrode assembly. For example, the electrode and the separator are prepared in in the shape of a long strip, and the lamination process may be performed on the electrode and the separator of such a shape using a roll lamination process using a pair of press rollers, and in this instance, the electrode and the separator are attached well, thereby reducing the risk of dislocation of the electrode and the separator. Additionally, the electrode assembly may be moved to be received in the battery case, and in this instance, the separator and the electrode in the electrode assembly are bonded well by the fluorine-based polymer, thereby stably maintaining the shape and reducing the risk of separation.

Subsequently, the step of activating the battery is performed (S300).

The activation step comprises initially charging the manufactured battery, whereby the electrode active material may be electrically activated, and a SEI layer may be formed on the electrode surface. Meanwhile, in the activation step, gas may be generated in the battery through the decomposition reaction of the electrolyte solution. The gas generated during the initial charging may be let out through re-opening the sealed battery container or cutting a part of the battery container.

In an embodiment of the present disclosure, the charging may be performed in the SOC range of 10% or more, or 30% or more, or 50% or more, and there is no particular limitation on the upper limit of the SOC, but the upper limit of the SOC may be 100%, or 90%. Additionally, in the initial charging, the cutoff voltage may be 3.5V or more, or 3.5 to 4.5V, or 3.65 to 4.5V. The C-rate of the initial charging may be 0.05C to 2C, or 0.1C to 2C.

Subsequently, the battery is thermally treated (S400).

The thermal treatment step comprises dissolving the binder polymer included in the porous coating layer by the electrolyte solution. In other words, the thermal treatment step comprises dissolving the binder polymer by the electrolyte solution by changing the properties of the binder polymer in the presence of the electrolyte solution comprising the organic solvent. In particular, the agglomerated binder polymer is released in this step. The electrolyte solution may comprise the organic solvent described in the step (S20). In an embodiment of the present disclosure, 90% or more of the pores formed in the porous coating layer may have the pore size in the range of 0.01 *µ*m to 1 *µ*m through the thermal treatment step.

According to an embodiment of the present disclosure, in the thermal treatment step, the fluorine-based binder polymer dissolves by the chemical reaction between the fluorine-based binder polymer agglomerated by heat/pressure in the lamination step of placing the separator between the positive electrode and the negative electrode and the electrolyte solution injected into the electrode assembly. Accordingly, the fluorine-based binder polymer changes the phase from solid to liquid, and the macro pore may be formed at the location at which the fluorine-based binder polymer is agglomerated and aggregated.

Meanwhile, in an embodiment of the present disclosure, the thermal treatment may be performed between (S200) and (S300).

In a specific embodiment of the present disclosure, the method may further comprise an aging step to increase the electrolyte solution wettability. For example, the aging step may be performed between the steps (S200) and (S300), between the steps (S300) and (S400), and after the step (S400). Additionally, the aging step may be performed in different steps and/or twice in the same step. Meanwhile, the aging temperature may be performed, for example, at the temperature of 20°C to 40°C, or 23°C to 35°C, or 23°C to 30°C, or 23°C to 27°C, or 23°C to 25°C. In this instance, the aging step may be performed for 1 day to 7 days, or 1 day to 5 days. According to an embodiment of the present disclosure, the activation step may be performed by charging in 0.1C CC condition up to 3.65 V at SOC 30% and storing at room temperature, 25°C, for 3 days.

In the electrode assembly into which the electrolyte solution is injected, the preliminary separator reacts with the electrolyte solution, and when thermal treatment is applied, the agglomerated binder polymer dissolves to form a pore. In the present disclosure, it is called the macro pore.

An electrochemical device according to an aspect of the present disclosure includes a positive electrode, a negative electrode, and a separator interposed between the positive electrode and the negative electrode, and the separator is the above-described separator according to an embodiment of the present disclosure.

The electrochemical device may include any type of device using electrochemical reactions, and for example, may include primary and secondary batteries, fuel cells, solar cells or capacitors such as super capacitors. In particular, among the secondary batteries, lithium secondary batteries including lithium metal secondary batteries, lithium ion secondary batteries, lithium polymer secondary batteries or lithium ion polymer secondary batteries are desirable.

The positive and negative electrodes to be used with the separator of the present disclosure are not limited to a particular type, and may be manufactured by binding an electrode active material to an electrode current collector by a common method known in the technical field pertaining to the present disclosure. Of the electrode active materials, non-limiting examples of the positive electrode active material may include positive electrode active materials commonly used in positive electrodes of electrochemical devices, and preferably include lithium manganese oxide, lithium cobalt oxide, lithium nickel oxide, lithium iron oxide or their lithium composite oxide. Non-limiting examples of the negative electrode active material may include negative electrode active materials commonly used in negative electrodes of electrochemical devices, and preferably include lithium adsorption materials such as lithium metal or lithium alloy, carbon, petroleum coke, activated carbon, graphite or other carbons. Non-limiting examples of the positive electrode current collector may include foils made from aluminum, nickel or a combination thereof, and non-limiting examples of the negative electrode current collector may include foils made from copper, gold, nickel or copper alloy or a combination thereof.

An electrolyte solution, which may be used in the electrochemical device of the present disclosure, comprises a salt having a structure represented as A⁺B⁻, wherein A⁺ is an alkali metal cation such as Li⁺, Na⁺, K⁺ or a combination thereof, and B⁻ is an anion such as PF₆⁻, BF₄⁻, Cl⁻, Br⁻, I⁻, ClO₄⁻, AsF₆⁻, CH₃CO₂⁻, CF₃SO₃⁻, N(CF₃SO₂)₂⁻, C(CF₂SO₂)₃⁻or a combination thereof, and an organic solvent in which the salt is dissolved or dissociated, the organic solvent including at least one of propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethylmethylcarbonate (EMC) or γ-butyrolactone.

In an embodiment of the present disclosure, the battery case may include an aluminum laminate pouch. The aluminum laminate pouch is a film having the thickness of about 100 *µ*m comprising a Nylon-Aluminum-Polypropylene layer, and the case may be sealed by the melting of the polypropylene by heat and pressure.

The pouring of the electrolyte solution may be performed in any suitable step of the battery manufacturing process according to a manufacturing process and required properties of a final product. That is, the pouring of the electrolyte solution may be applied before battery assembly or in the final step of battery assembly.

Hereinafter, the present disclosure will be described in detail through examples. However, the examples of the present disclosure may be modified in many other forms, and the scope of the present disclosure should not be construed as being limited to the following examples. The examples of the present disclosure are provided to fully explain the present disclosure to those having ordinary knowledge in the art to which the present disclosure pertains.

### Example 1

### [Manufacture of separator]

Aluminum hydroxide (Al(OH)₃) as inorganic particles and polyvinylidene fluoride hexafluoropropylene (PVDF-HFP, weight average molecular weight: 700,000, HFP content: 10%) as a binder polymer are added to an acetone solvent at a weight ratio of 80 : 20 to prepare a porous coating layer forming slurry.

The prepared porous coating layer forming slurry is coated on two surfaces of a 9 *µ*m thick polyethylene porous polymer substrate (porosity: 43%, air permeation time: 110 sec, resistance 0.45 ohm) by dip coating and dried in the conditions of 23 °C and the relative humidity of 40% to manufacture a preliminary separator having a porous coating layer.

Subsequently, the preliminary separator is wetted in dimethyl carbonate as an organic solvent, and thermally treated at 80 °C for 3 hours to manufacture a final separator.

### Example 2

A separator is manufactured by the same method as Example 1, except that polyvinylidene fluoride hexafluoropropylene (PVDF-HFP, weight average molecular weight: 700,000, HFP content: 15%) is used as the binder polymer, instead of polyvinylidene fluoride hexafluoropropylene (PVDF-HFP, weight average molecular weight: 700,000, HFP content: 10%).

### Comparative example 1

A separator is manufactured in the same way as Example 1 except that the thermal treatment process is not performed.

Specifically, the separator is manufactured as follows.

Aluminum hydroxide (Al(OH)₃) as inorganic particles and polyvinylidene fluoride hexafluoropropylene (PVDF-HFP, weight average molecular weight: 700,000, HFP content: 10%) as a binder polymer are added to an acetone solvent at a weight ratio of 80 : 20 to prepare a porous coating layer forming slurry.

The prepared porous coating layer forming slurry is coated on two surfaces of a 9 *µ*m thick polyethylene porous polymer substrate (porosity: 43%, air permeation time: 110 sec, resistance 0.45 ohm) by dip coating and dried in the conditions of 23 °C and the relative humidity of 40% to manufacture a final separator having a porous coating layer.

### Comparative example 2

A separator is manufactured in the same way as Example 2 except that the thermal treatment process is not performed.

### Comparative example 3

Aluminum hydroxide (Al(OH)₃) as inorganic particles and polyvinylidene fluoride hexafluoropropylene (PVDF-HFP, weight average molecular weight: 700.000, HFP content: 0%) as a binder polymer are added to an acetone solvent at a weight ratio of 80 : 20 to prepare a porous coating layer forming slurry.

The prepared porous coating layer forming slurry is coated on two surfaces of a 9 *µ*m thick polyethylene porous polymer substrate (porosity: 43%, air permeation time: 110 sec, resistance 0.45 ohm) by dip coating and dried in the conditions of 23°C and the relative humidity of 40% to manufacture a final separator having a porous coating layer.

### Comparative example 4

A separator is manufactured in the same way as Comparative example 3 except that the thermal treatment process is performed.

Specifically, the separator is manufactured as follows.

Aluminum hydroxide (Al(OH)₃) as inorganic particles and polyvinylidene fluoride hexafluoropropylene(PVDF-HFP, weight average molecular weight: 700,000, HFP content: 0%) as a binder polymer are added to an acetone solvent at a weight ratio of 80 : 20 to prepare a porous coating layer forming slurry.

The prepared porous coating layer forming slurry is coated on two surface of a 9 *µ*m thick polyethylene porous polymer substrate (porosity: 43%, air permeation time: 110 sec, resistance 0.45 ohm) by dip coating and dried in the conditions of 23 °C and the relative humidity of 40% to manufacture a preliminary separator having a porous coating layer.

Subsequently, the preliminary separator is wetted in dimethyl carbonate as an organic solvent and thermally treated at 80 °C for 3 hours to manufacture a final separator.

### Comparative example 5

Aluminum hydroxide (Al(OH)₃) as inorganic particles and polyvinylidene fluoride hexafluoropropylene (PVDF-HFP, weight average molecular weight: 700,000, HFP content: 5%) as a binder polymer are added to an acetone solvent at a weight ratio of 80 : 20 to prepare a porous coating layer forming slurry.

The prepared porous coating layer forming slurry is coated on two surfaces of a 9 *µ*m thick polyethylene porous polymer substrate (porosity: 43%, air permeation time: 110 sec, resistance 0.45 ohm) by dip coating and dried in the conditions of 23°C and the relative humidity of 40% to manufacture a final separator having a porous coating layer.

### Comparative example 6

A separator is manufactured in the same way as Comparative example 5 except that the thermal treatment process is performed.

Specifically, the separator is manufactured as follows.

Aluminum hydroxide (Al(OH)₃) as inorganic particles and polyvinylidene fluoride hexafluoropropylene (PVDF-HFP, weight average molecular weight: 700,000, HFP content: 5%) as a binder polymer are added to an acetone solvent at a weight ratio of 80 : 20 to prepare a porous coating layer forming slurry.

The prepared porous coating layer forming slurry is coated on two surfaces of a 9 *µ*m thick polyethylene porous polymer substrate (porosity: 43%, air permeation time: 110 sec, resistance 0.45 ohm) by dip coating and dried in the conditions of 23 °C and the relative humidity pf 40% to manufacture a preliminary separator having a porous coating layer.

Subsequently, the preliminary separator is wetted in dimethyl carbonate as an organic solvent and thermally treated at 80°C for 3 hours to manufacture a final separator.

### Experimental example 1

The ionic conductivity of the separators manufactured in Examples 1 to 2 and Comparative examples 1 to 6 is measured and compared.

The ionic conductivity of the separator is measured by manufacturing a coin half cell using the separator alone and injecting a non-aqueous electrolyte solution comprising an organic solvent of ethylene carbonate (EC) and dimethyl carbonate (DMC) at a volume ratio of 3:7 and 1.0M LiPF₆.

**[Table 1]**

| | With or without thermal treatment | HFP content | Ionic conductivity of separator (S/cm) | Increase (%) in ionic conductivity of separator after thermal treatment compared to before thermal treatment |
|---|---|---|---|---|
| Comparative example 1 | X | 10% | 5.3 × 10⁻⁴ | - |
| Example 1 | O | 10% | 5.6 × 10⁻⁴ | 5.5% |
| Comparative example 2 | X | 15% | 4.3 × 10⁻⁴ | - |
| Example 2 | O | 15% | 5.2 × 10⁻⁴ | 22% |
| Comparative example 3 | X | 0% | 5.9 × 10⁻⁴ | - |
| Comparative example 4 | O | 0% | 5.9 × 10⁻⁴ | 0% |
| Comparative example 5 | X | 5% | 5.8 × 10⁻⁴ | - |
| Comparative example 6 | O | 5% | 5.8 × 10⁻⁴ | 0% |

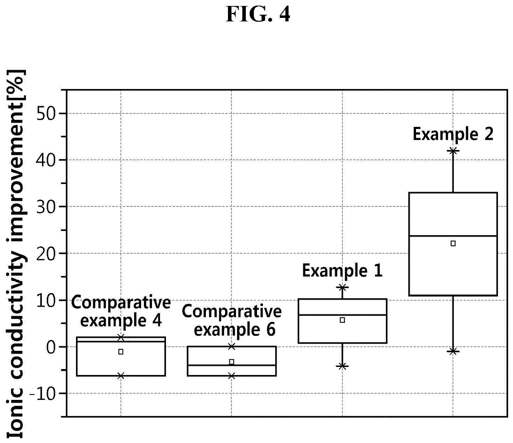

As can be seen from Table 1 and FIG. 4, Comparative examples 1 to 2 without the thermal treatment process have lower ionic conductivity of the separator than Examples 1 to 2 with the thermal treatment process. FIG. 4 shows the ionic conductivity improvement level as a function of the comonomer content. Additionally, as can be seen from Comparative examples 4 and 6 in FIG. 4 and Table 1, even though the thermal treatment process is performed, when the comonomer content, i.e., the HFP content is outside of a predetermined range, the ionic conductivity of the separator does not increase even after the thermal treatment.

It can be seen that as with an aspect of the present disclosure, to increase the ionic conductivity of the separator, the comonomer content control and the thermal treatment process are all necessary.

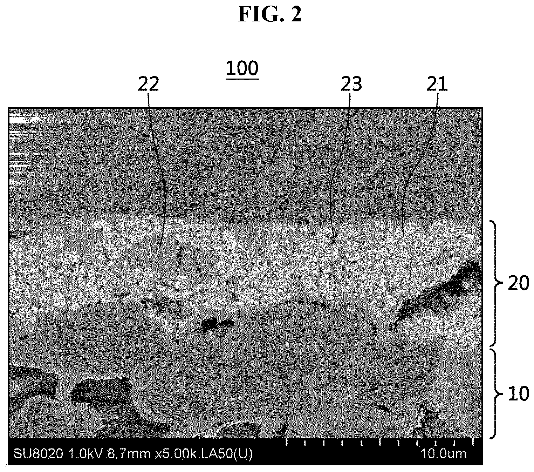

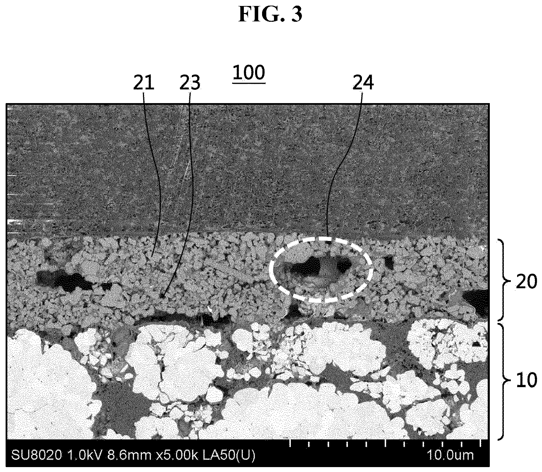

FIGS. 2 and 3 show SEM images showing a process of forming the separator according to an aspect of the present disclosure. As shown in FIG. 2, when the HFP content is 8 to 15 percent by weight, the binder polymer 22 agglomerates. When the preliminary separator comprising the porous coating layer comprising the agglomerated binder polymer is wetted in the organic solvent, the organic solvent dissolves the agglomerated binder polymer to form a macro pore 24 as shown in FIG. 3. That is, the separator for a lithium secondary battery according to an aspect of the present disclosure comprises interstitial volume 23 and the macro pore together.

### [Example 3 and Comparative example 7]

### (1) Manufacture of separator

Polyvinylidene fluoride-co-hexafluoropropylene (PVdF-HFP) as a first binder resin, PVdF-CTFE as a second binder resin and cyano resin (CR-V, Shinetu, a dispersing agent) are added to acetone and dissolved at 50°C for about 12 hours or more to prepare a polymer solution. The PVdF-HFP and PVDF-CTFE used in each preparation example is summarized in the following [Table 2]. Alumina (Al₂O₃) powder (powder phase) having the particle diameter D₅₀ of 500 nm is added and dispersed in the prepared polymer solution to prepare a composition for a porous coating layer. The weight ratio of PVdF-HFP:PVDF-CTFE:cyano resin:inorganic particles is 15.5:4.5:2.0:78.

The prepared composition is coated on two surfaces of a 15*µ*m thick polyethylene porous membrane (porosity 40%) by dip coating, and dried under the conditions of 25°C and the relative humidity of 40% to obtain a separator having a 6*µ*m thick porous coating layer. The thickness refers to the total thickness of the porous coating layer formed on the two surfaces of the substrate.

**[Table 2]**

| | First binder resin PVDF-HFP | | | Second binder resin PVDF-CTFE | | |
|---|---|---|---|---|---|---|
| | HFP Degree of sub stitution (%) | Tm(°C) | crystallinity (%) | CTFE Degree of sub stitution (%) | Tm(°C) | Crystallinity (%) |
| Separator preparation example 1 (1) | 15 | 130 | 22 | 20 | 151 | - |
| Separator preparation example 2 (2) | 8 | 150 | 28 | 20 | 151 | - |

### (2) Property evaluation of separator

### (2-1) Measurement of interfacial adhesion

In the separators (1) and (2), the interfacial adhesion between the separator substrate and the porous coating layer is measured in the following condition. Each separator sample obtained from the separators 1 and 2 is prepared in the size of 1.5 cm ×10 cm. A 3M double sided tape is attached to a slide glass and each separator is attached to the double sided tape. The UTM conditions include 10N load cell and 180° mode, and the rate of 300 mm/min. The measurement results are summarized in the following [Table 3].

**[Table 3]**

| | Separator (1) | Separator (2) |
|---|---|---|
| Interfacial adhesion (gf/25mm) | 112 | 32 |

It is found that the separators (1) and (2) have sufficient adhesion between the separator substrate and the porous coating layer. Accordingly, it is effective in reducing the fault ratio in the lamination process in the manufacture of the electrode assembly. Meanwhile, since the separator (1) has higher interfacial adhesion than the separator (2), it is found that the separator (1) has high processability.

### (2-2) Measurement of adhesion to electrodes

Separator-negative electrode stack samples (1) and (2) are prepared by laminating the separator (1) and the negative electrode and the separator (2) and the negative electrode, respectively. The samples (1) and (2) are prepared in the size of 2.5cm × 10cm. A 3M double sided tape is attached to a slide glass and each sample is attached to the double sided tape such that a separator surface is in contact with the double sided tape. The UTM conditions include 10N load cell and 180° mode and the rate of 300 mm/min. The measurement results are summarized in the following [Table 4]. The negative electrode is prepared according to the method described in the following item (2).

**[Table 4]**

| | Sample (1) | Sample (2) |
|---|---|---|
| Adhesion to electrodes (gf/25mm) | 55 | 44 |

It is found that the samples (1) and (2) exhibit sufficient adhesion to electrodes. Accordingly, it is effective in reducing the fault ratio in the lamination process of the separator and the electrode in the manufacture of the electrode assembly. Meanwhile, since the sample (1) has higher interfacial adhesion than the sample (2), it is found that the sample (1) has high processability.

### (3) Manufacture of negative electrode

A negative electrode active material (Graphite), a conductive material (super P) and a binder (CMC/SBR weight ratio 1:1) are put into a solvent (water) at a weight ratio (wt%) of 97.5: 1.5: 1 and mixed (2000 rpm, 30 min) to prepare a negative electrode slurry. The prepared negative electrode slurry is coated on a 20*µ*m thick copper film using a doctor blade and dried at 110°C (overnight). The thickness of the positive electrode is adjusted to about 100*µ*m ~ 110*µ*m, and a pressing process is performed using a press (a roll press) to make the final thickness about 60*µ*m ~ 70*µ*m. The prepared electrode is maintained in a vacuum dryer of 80°C for 4 hours.

### (4) Manufacture of battery

### (4-1) Examples 3-1 and 3-2

Each of the separators (1) and (2) obtained in the preparation example is placed between two sheets of stainless steel (SUS) and stacked, and a coin cell battery is manufactured using the same. An electrolyte solution of the battery comprises an organic solvent of ethylene carbonate and ethylmethyl carbonate at a mix ratio of 3:7 (vol) and 1.2M LiPF₆. Subsequently, each coin cell is kept in an oven maintained at 85°C for 4 hr.

### (4-2) Comparative examples 7-1 and 7-2

Each of the separators (1) and (2) obtained in the preparation example is placed between two sheets of stainless steel (SUS) and stacked, and a coin cell battery is manufactured using the same. An electrolyte solution of the battery comprises an organic solvent of ethylene carbonate and ethylmethyl carbonate at a mix ratio of 3:7 (vol) and 1.2M LiPF₆.

### 2. Evaluation of characteristics

### (1) Measurement of ionic conductivity

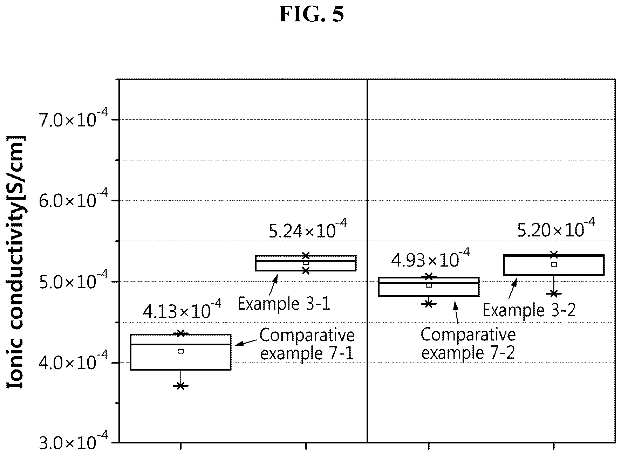

For each of the batteries of Example 3-1, Example 3-2, Comparative example 7-1 and Comparative example 7-2, the ionic conductivity is measured. The ionic conductivity is calculated by measuring the resistance by EIS (electrochemical impedance spectroscopy). The ionic conductivity is converted into based on the thickness and the area of the separator. This is shown in FIG. 5. The unit of the ionic conductivity is S/cm. It is found that the batteries of Examples 3-1 and 3-2 have higher ionic conductivity than the batteries of Comparative example due to the aging process. In particular, in the case of Example 3-1 using the binder with low PVdF-HFP content, low crystallinity and low melting temperature, dry adhesion is superior, and processability is superior in the manufacture of the electrode assembly. Additionally, through the aging process, the ionic conductivity is increased by 27% compared to Comparative example 7-1, and thus it is found that dry adhesion as well as the ionic conductivity is superior after the electrolyte solution wetting.

### [Explanation of Reference Numerals]

100: Separator
10: Porous polymer substrate
20: Porous coating layer
21: Inorganic particle
22: Binder polymer
23: Interstitial volume
24: Macro pore

## Claims

1. A method for manufacturing a lithium secondary battery, comprising:
(S10) preparing a separator comprising a porous polymer substrate and a porous coating layer formed on at least one surface of the porous polymer substrate;
(S20) thermally treating the separator in the presence of an organic solvent; and
(S30) putting an electrode assembly comprising the manufactured separator interposed between a positive electrode and a negative electrode in a battery case and injecting an electrolyte solution to manufacture a battery,
wherein the porous coating layer comprises inorganic particles and a binder polymer,
the binder polymer comprises a fluorine-based copolymer,
the fluorine-based copolymer comprises a vinylidene fluoride (VDF) monomer and a comonomer that is copolymerizable with the vinylidene fluoride,
the comonomer content is 5 to 15 percent by weight based on 100 percent by weight of the fluorine-based copolymer, and
the separator has ionic conductivity of 4.75 × 10⁻⁴ S/cm or more.

2. The method for manufacturing a lithium secondary battery according to claim 1, wherein (S20) the thermal treatment step is performed at a temperature of 75 °C or more.

3. The method for manufacturing a lithium secondary battery according to claim 1, wherein the step (S10) comprises coating a porous coating layer forming slurry comprising the inorganic particles and the binder polymer on the porous polymer substrate and drying.

4. The method for manufacturing a lithium secondary battery according to claim 1, wherein the organic solvent comprises at least one of propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethylmethyl carbonate (EMC), or γ-butyrolactone.

5. The method for manufacturing a lithium secondary battery according to claim 1, wherein the step (S20) comprises thermally treating the separator to form a macro pore that is one to five times larger than an average diameter of interstitial volume in the porous coating layer within the separator.

6. The method for manufacturing a lithium secondary battery according to claim 1, wherein the fluorine-based copolymer has crystallinity of 30% or less and/or a melting temperature of 155°C or less.

7. The method for manufacturing a lithium secondary battery according to claim 1, further comprising:
after the step (S30),
(S40) activating the battery containing the injected electrolyte solution.

8. A method for manufacturing a lithium secondary battery, comprising:
(S100) preparing a separator comprising a porous polymer substrate and a porous coating layer formed on at least one surface of the porous polymer substrate;
(S200) putting an electrode assembly comprising the separator interposed between a positive electrode and a negative electrode in a battery case and injecting an electrolyte solution to manufacture a battery;
(S300) activating the battery; and
(S400) thermally treating the battery between the steps (S200) and (S300) or after the step (S300),
wherein the porous coating layer comprises inorganic particles and a binder polymer,
the binder polymer comprises a fluorine-based copolymer,
the fluorine-based copolymer comprises a vinylidene fluoride (VDF) monomer and a comonomer that is copolymerizable with the vinylidene fluoride,
the comonomer content is 10 to 15 percent by weight or less based on 100 percent by weight of the fluorine-based copolymer, and
the separator has ionic conductivity of 4.75 × 10⁻⁵ S/cm or more.

9. The method for manufacturing a lithium secondary battery according to claim 8, wherein the fluorine-based copolymer has crystallinity of 30% or less and/or a melting temperature of 155°C or less.

10. A lithium secondary battery comprising a positive electrode, a negative electrode and a separator interposed between the positive electrode and the negative electrode, wherein the separator comprises a porous polymer substrate and a porous coating layer formed on at least one surface of the porous polymer substrate,
the porous coating layer comprises inorganic particles and a binder polymer,
the binder polymer comprises a fluorine-based copolymer,
the fluorine-based copolymer comprises a vinylidene fluoride (VDF) monomer and a comonomer that is copolymerizable with the vinylidene fluoride,
the comonomer content is 5 to 15 percent by weight based on 100 percent by weight of the fluorine-based copolymer content, and the porous coating layer comprises interstitial volume which is a space defined by the inorganic particles in substantially contact with each other,
at the same time, the porous coating layer comprises a macro pore formed by dissolution of the fluorine-based copolymer in the electrolyte solution, and
the separator has ionic conductivity of 4.75 × 10⁻⁴ S/cm or more.

11. The lithium secondary battery according to claim 10, wherein the porous coating layer comprises the macro pore that is larger than the interstitial volume, and
the porous coating layer comprises the interstitial volume and the macro pore together.

12. The lithium secondary battery according to claim 10, wherein an average diameter (D50) of the macro pore is one to five time larger than an average diameter of the interstitial volume.

13. The lithium secondary battery according to claim 10, wherein the average diameter (D50) of the interstitial volume in the porous coating layer is 0.001 *µ*m to 0.1 *µ*m, and the average diameter (D50) of the macro pore is larger than the average diameter of the interstitial volume, and is 0.5 *µ*m to 5 *µ*m.

14. The lithium secondary battery according to claim 10, wherein the comonomer comprises at least one of hexafluoropropylene (HFP), trifluoroethylene (TrFE), tetrafluoroethylene (TFE), methyl vinyl ether or ethyl vinyl ether (EVE).

15. The lithium secondary battery according to claim 10, wherein the fluorine-based copolymer has crystallinity of 30% or less and/or a melting temperature of 155°C or less.
